# EUROPEAN PATENT APPLICATION

(11) **EP 4 459 715 A1**
(43) Date of publication of application: **06.11.2024**
(21) Application number: 24159982.8
(22) Date of filing: 27.02.2024
(51) Int. Cl.: H01M 4/525, H01M 4/58, H01M 4/62, H01M 10/0525, H01M 4/02

(54) **POSITIVE ELECTRODE FOR RECHARGEABLE LITHIUM BATTERY AND RECHARGEABLE LITHIUM BATTERY INCLUDING SAME**

(30) Priority: 03.05.2023 KR 20230057970
(71) Applicant: Samsung SDI Co., Ltd., Yongin-si, Gyeonggi-do 17084 (KR)
(72) Inventor: SUH, Soonsung, 17084 Yongin-si (KR); KIM, Myungseop, 411-746 Goyang-si (KR); KO, Youngsan, 17084 Yongin-si (KR); LEE, Minju, 17084 Yongin-si (KR); LEE, Boram, 17084 Yongin-si (KR); CHOI, Kyuhwan, 17084 Yongin-si (KR)
(74) Representative: Marks & Clerk LLP

(57) **Abstract**

A positive electrode includes a positive electrode active material layer including a positive electrode active material of Chemical Formula 1 and carbon nanotubes with an average length of about 30 µm to about 80 µm; and a current collector supporting the positive electrode active material layer, wherein the positive electrode has an active mass density of greater than or equal to about 2.5 g/cc;

Chemical Formula 1 LiₐFe₁₋ₓMₓPO₄

wherein in Chemical Formula 1, 0.90≤a≤1.8, 0≤x≤0.7, and
M is Mg, Co, Ni, Mn, or a combination thereof.

## Description

### BACKGROUND

### 1. Field

One or more embodiments of the present disclosure are directed toward a positive electrode for a rechargeable lithium battery and a rechargeable lithium battery including the same.

### 2. Description of the Related Art

Recently, with the rapid spread of electronic and/or electric devices that utilize batteries, such as mobile phones, laptop computers, and/or electric vehicles, a demand or desire in the industry for a small, lightweight, and relatively high-capacity rechargeable lithium batteries is rapidly increasing.

A rechargeable lithium battery may include a positive electrode including a positive electrode active material, a negative electrode including a negative electrode active material, a separator between the positive electrode and the negative electrode, and an electrolyte.

### SUMMARY

One or more aspects of embodiments of the present disclosure are directed toward a positive electrode for a rechargeable lithium battery that has a relatively high active mass density and may exhibit a relatively high or improved output.

One or more aspects of embodiments are directed toward a rechargeable lithium battery including the positive electrode.

In one or more embodiments, a positive electrode for a rechargeable lithium battery includes a positive electrode active material layer including a positive electrode active material of Chemical Formula 1 and carbon nanotubes with an average length of about 30 µm to about 80 µm; and a current collector supporting the positive electrode active material layer, wherein the positive electrode has an active mass density of greater than or equal to about 2.5 g/cc.

Chemical Formula 1 LiₐFe₁₋ₓMₓPO₄.

In Chemical Formula 1, 0.90≤a≤1.8, 0≤x≤0.7, and
M is Mg, Co, Ni, Mn, or a combination thereof.

The active mass density may be about 2.5 g/cc to about 3.3 g/cc.

A porosity of the positive electrode active material layer may be greater than or equal to about 20%, or may be about 20% to about 30%.

The positive electrode active material may have a nanometer size (e.g., a size on a nanometer scale), and/or may have a particle diameter (e.g. average particle diameter, such as D50) of about 100 nm to about 5000 nm.

An amount of the carbon nanotubes may be less than about 1 wt%, or greater than or equal to about 0.5 wt% and less than about 1 wt%, based on a total weight of the positive electrode active material layer.

An average length of the carbon nanotubes may be about 40 µm to about 80 µm.

The positive electrode active material layer may further include a conductive material (e.g. carbon black), and/or may further include a binder.

In one or more embodiments, a rechargeable lithium battery includes the positive electrode; a negative electrode including a negative electrode active material; and an electrolyte.

At least some of the above and other features of the invention are set out in the claims.

Other embodiments of the present disclosure are included in the following detailed description.

The positive electrode for a rechargeable lithium battery according to the present embodiments has an active mass density, and thus may exhibit a relatively high or suitable capacity and a relatively high or improved output.

### BRIEF DESCRIPTION OF THE DRAWINGS

FIG. 1 is a schematic view showing the structure of a rechargeable lithium battery according to one or more embodiments.
FIG. 2 is a graph showing cycle-life characteristics of battery cells manufactured according to Examples 1-6 and Comparative Examples 1-3.
FIG. 3 is an image showing the state after winding the positive electrode manufactured according to Example 3.
FIG. 4 is an image showing the state after winding the positive electrode manufactured according to Comparative Example 1.

### DETAILED DESCRIPTION

Hereinafter, embodiments of the present disclosure are described in more detail. However, these embodiments are example, the present disclosure is not limited thereto and the present disclosure is defined by the scope of claims.

The terminology utilized herein is utilized to describe embodiments only, and is not intended to limit the present disclosure. The singular expression includes the plural expression unless the context clearly dictates otherwise.

As utilized herein, "a combination thereof" refers to a mixture, a laminate, a composite, a copolymer, an alloy, a blend, a reaction product, and/or the like of constituents.

As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As used herein, the term "and/or" includes any and all combinations of one or more of the associated listed items.

Further, the use of "may" when describing embodiments of the present disclosure refers to "one or more embodiments of the present disclosure".

Here, it should be understood that terms such as "comprises," "includes," and/or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification, and duplicative descriptions thereof may not be provided. It will be understood that when an element such as a layer, film, region, or substrate is referred to as being "on" another element, it may be directly on the other element (e.g., without any intervening elements therebetween) or intervening element(s) may also be present. In contrast, when an element is referred to as being "directly on" another element, there are no intervening elements present.

In some embodiments, "layer" as used herein includes not only a shape or structure formed on the whole (e.g., entire) surface when viewed from a plan view, but also a shape or structure formed on a partial surface (e.g., on a portion of the surface).

Herein, "or" is not to be construed as an exclusive meaning, for example, "A or B" is construed to include A, B, A+B, and/or the like.

As utilized herein, when a definition is not otherwise provided, a particle diameter or size may be an average particle diameter. This average particle diameter refers to an average particle diameter (D50), which is a diameter of particles with a cumulative volume of 50 volume% in the particle size distribution. In some embodiments, the particle size (D90) refers to a particle diameter (D90), which refers to a diameter of particles with a cumulative volume of 90 volume% in the particle size distribution. The average particle size (D50) may be measured by a suitable technique, for example, by measuring with a particle size analyzer, a transmission electron microscope, and/or scanning electron microscope. In some embodiments, a dynamic light-scattering measurement device is utilized to perform a data analysis, and the number of particles is counted for each particle size range. From this, the average particle diameter (D50) value may be easily obtained through a calculation. A laser diffraction method may also be utilized. When measuring by laser diffraction, more specifically, the particles to be measured are dispersed in a dispersion medium and then introduced into a commercially available laser diffraction particle size measuring device (e.g., MT 3000 available from Microtrac, Inc) utilizing ultrasonic waves at about 28 kHz, and after irradiation with an output of 60 W, the average particle size (D50) based on 50% of the particle size distribution in the measuring device may be calculated. In the present specification, when particles are spherical, "diameter" indicates a particle diameter, and when the particles are non-spherical, the "diameter" indicates a major axis length.

Spatially relative terms, such as "beneath," "below," "lower," "above," "upper," "bottom," "top" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

As used herein, the terms "substantially", "about", and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Some embodiments provide a positive electrode for a rechargeable lithium battery including a positive electrode active material layer including a positive electrode active material and a carbon nanotube (e.g., carbon nanotubes) having an average length of about 30 µm to about 80 µm; and a current collector supporting the positive electrode active material layer.

The positive electrode active material is an olivine-based (olivine phosphate) compound represented by Chemical Formula 1.

Chemical Formula 1 LiₐFe₁₋ₓMₓPO₄.

In Chemical Formula 1, 0.90≤a≤1.8, 0≤x≤0.7, and
M is Mg, Co, Ni, Mn, or a combination thereof.

The positive electrode active material may comprise lithium iron phosphate (e.g. LiFePO₄).

The positive electrode according to some embodiments only includes the compound represented by Chemical Formula 1 as a positive electrode active material, which is referred to as an olivine-based positive electrode active material hereinafter. The olivine-based positive electrode active material has a relatively low theoretical density of about 3.6 g/cc, electrical conductivity of about 10⁻⁹ S/cm to about 10⁻¹⁰ S/cm, which is very low, compared with that (about 10⁻² S/cm) of a cobalt-based positive electrode active material or that (about 10⁻⁵ S/cm) of a nickel cobalt manganese-based positive electrode active material, and in addition, has a very low (or suitably low) lithium diffusion coefficient of about 1.8 X 10⁻¹⁴ cm²/S to about 10⁻⁸ cm²/S.

However, the olivine-based positive electrode active material has excellent or improved structural safety, compared with, for example, a positive electrode active material with a layered structure, and thus has no problem (or substantially no problem) of exothermic and oxygen generation due to decomposition. In some embodiments, the olivine-based positive electrode active material has excellent or improved thermal safety and no (or substantially no) oxygen generation and thus no (or substantially no) risk of explosion. Furthermore, the olivine-based positive electrode active material has a very flat or suitably flat discharge profile and exhibits the same output characteristics at the beginning and end of the discharge, and exhibits excellent or suitable characteristics if subjected to a high temperature for a long period. In one or more embodiments, in order to take advantage of these improved characteristics but still overcome disadvantages in conductivity, the olivine-based active material with carbon nanotubes with a set or specific length is utilized to provide the positive electrode.

In some embodiments, the carbon nanotubes may have an average length of about 30 µm to about 80 µm, or about 40 µm to about 80 µm (e.g. about 50 µm to about 80 µm, about 55 µm to about 75 µm, or about 60 µm to about 70 µm). In some embodiments, the average length of the carbon nanotubes may be obtained by measuring lengths of the carbon nanotubes on a Scanning Electron Microscope (SEM) image of a surface of the manufactured positive electrode or the positive electrode separated from a battery subjected to formation charging and discharging and then, averaging the measured lengths.

If the carbon nanotubes have an average length within any of the ranges of the present embodiments, a plurality of the active materials and the current collector may be effectively or suitably connected, and in addition, a conductive network between the active materials themselves may be strengthened. As a result, in a high density positive electrode with active mass density of about 2.5 g/cc or more, because electronic conductivity and ionic conductivity of the active material of Chemical Formula 1 are improved, an effect of reducing resistance and improving cycle-life may be obtained, and flexibility of the positive electrode may be improved.

As the carbon nanotubes having an average length of about 30 µm to about 80 µm are utilized with the olivine-based positive electrode active material, a relatively low conductivity of the olivine-based positive electrode active material may be improved, and thus the olivine-based positive electrode active material alone may be utilized for the positive electrode. In some embodiments, a positive electrode having a relatively high active mass density may be provided.

If the carbon nanotubes have a shorter average length than the ranges provided herein, for example, shorter than about 30 µm, the active materials themselves may be connected, but the connection of the plurality of the active materials to the current collector may be weakened, which may lead to an insufficient or unsuitable cycle-life improvement effect in the high density positive electrode. In addition, an amount of the carbon nanotubes may need to be increased in the positive electrode active material layer, which may in turn deteriorate capacity. Furthermore, if the carbon nanotubes have a larger average length than about 80 µm, dispersibility of the active material and the carbon nanotubes in the positive electrode active material layer may be deteriorated, and the network between active materials themselves may not be sufficiently or suitably improved in the high density positive electrode.

In some embodiments, the carbon nanotubes may have a diameter, for example, an average diameter, of about 1 nm to about 50 nm, or about 5 nm to about 30 nm (e.g. about 10 nm to about 20 nm).

In some embodiments, the carbon nanotubes may have a Brunauer-Emmett-Teller (BET) specific surface area of about 200 m²/g to about 300 m²/g. If the carbon nanotubes have a specific surface area within the above ranges, the effects of utilizing the carbon nanotubes may be sufficiently or suitably obtained, while maintaining appropriate or suitable conductivity and capacity.

The olivine-based active material may have a nanometer size (e.g., a size on a nanometer scale) or a size, for example, an average size (e.g. average particle diameter, such as D50) of about 100 nm to about 5000 nm, about 100 nm to about 4000 nm, about 250 nm to about 3000 nm, or about 500 nm to about 3000 nm (e.g. about 100 nm to about 2000 nm, about 100 nm to about 1000 nm, about 250 nm to about 800 nm, about 500 nm to about 700 nm, about 500 nm to about 600 nm, or about 500 nm to about 550 nm).

The olivine-based active material according to some embodiments may have a particle diameter D90 of about 3 µm to about 15 µm.

If the olivine-based active material has a nanometer size, because it also has a twisted shape, the low conductivity of the olivine-based active material may be improved (e.g., increased), and a lithium diffusion coefficient may be increased.

If the olivine-based active material having a nanometer size is utilized with the carbon nanotubes having an average length of about 30 µm to about 80 µm, the olivine-based active material having a nanometer size alone may be utilized to obtain a positive electrode having a relatively high or suitable active mass density.

In some embodiments, the positive electrode for a rechargeable lithium battery may have active mass density of about 2.5 g/cc or more or about 2.5 g/cc to about 3.3 g/cc (e.g. about 2.5 g/cc to about 2.9 g/cc). The positive electrode according to some embodiments may have the relatively high active mass density of the present embodiments, and thus may realize a high or suitable output battery, for example, a high output battery of about 450 Wh/l or more.

If the olivine-based active material alone (e.g., without the carbon nanotubes) is utilized to manufacture a positive electrode having high active mass density, for example, active mass density of about 2.5 g/cc or more, the olivine-based active material may become brittle and thus deteriorated.

In some embodiments, the positive electrode active material layer has pores, and may have porosity of about 20% or more, or about 20% to about 30%. Because the positive electrode active material layer has porosity within any of the above ranges, it may therefore have a sparse structure (e.g., a structure that is not very dense), and thus an electrolyte may be easily or suitably impregnated. As the positive electrode active material layer has the porosity according to the present embodiments, lithium ions and electrons may more easily or suitably move and thus improve cycle-life and capacity. In some embodiments, the porosity may be measured by a Barrett-Joyner-Halenda (BJH) method using a nitrogen adsorption method.

In some embodiments, the positive electrode active material layer may have a thickness of about 100 µm to about 300 µm, or about 150 µm to about 200 µm.

In some embodiments, an amount of the carbon nanotubes may be less than about 1 wt%, or greater than or equal to about 0.5 wt% and less than about 1 wt% (e.g. about 0.6 wt% to about 0.9 wt%, about 0.7 wt% to about 0.9 wt%, or about 0.8 wt% to about 0.9 wt%), based on 100 wt% of the total weight of the positive electrode active material layer.

Because the positive electrode according to some embodiments includes a relatively small amount of the carbon nanotubes, a decrease in the positive electrode active material amount by utilizing the carbon nanotubes may be relatively small. Accordingly, the effect of reducing resistance and improving a cycle-life may be sufficiently or suitably obtained by utilizing the carbon nanotubes, without a substantial decrease (e.g., with almost no decrease) in capacity that may occur if there is a decrease in the positive electrode active material amount.

In some embodiments, the amount of the positive electrode active material may be an amount excluding the amount of the carbon nanotubes based on 100 wt% of the total weight of the positive electrode active material layer. In some embodiments, if the positive electrode further includes carbon black and/or further a binder, the amount of the positive electrode active material may be appropriately or suitably adjusted depending on their amounts. For example, if the positive electrode includes the positive electrode active material, the carbon nanotubes, and the binder, the amount of the positive electrode active material may be greater than about 94 wt% and less than about 99 wt%.

The positive electrode active material layer according to some embodiments may further include a conductive material. The conductive material may include, for example, a carbon-based material such as acetylene black, ketjen black, channel black, furnace black, lamp black, thermal black, and/or denka black; a metal-based material such as copper, nickel, aluminium, and/or silver in a form of a metal powder and/or a metal fiber; a conductive polymer such as a polyphenylene derivative.

If the positive electrode active material layer further includes a conductive material, an amount of the conductive material may be about 1 wt% to about 3 wt% based on 100 wt% of the total weight of the positive electrode active material layer. If the amount of the conductive material is within the above range, more appropriate or suitable (e.g., improved) conductivity may be exhibited.

The positive electrode active material layer according to some embodiments may further include a binder. The binder serves to adhere the positive electrode active material particles to each other and also to adhere the positive electrode active material to the current collector. Representative examples of the binder may include polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but are not limited thereto.

In some embodiments, an amount of the binder may be about 1 wt% to about 5 wt% based on 100 wt% of the total positive electrode active material layer.

In some embodiments, Al may be utilized as the current collector, but is not limited thereto.

Some embodiments provide a rechargeable lithium battery including the positive electrode; a negative electrode including a negative electrode active material, and an electrolyte.

The negative electrode includes a current collector and a negative electrode active material layer on the current collector, and the negative electrode active material layer includes a negative electrode active material.

The negative electrode active material may include a material capable of reversibly intercalating/deintercalating lithium ions, lithium metal, lithium metal alloy, a material capable of doping/dedoping lithium, and/or transition metal oxide.

The material capable of reversibly intercalating/deintercalating lithium ions may be a carbon-based material. Any suitable carbon-based negative electrode active material for lithium-ion rechargeable batteries may be utilized, and examples thereof may include crystalline carbon, amorphous carbon, or a combination thereof. The crystalline carbon may be irregular, sheet, flake, spherical, and/or fiber shaped natural graphite and/or artificial graphite. The amorphous carbon may be a soft carbon, a hard carbon, a mesophase pitch carbonization product, fired coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn (e.g. Na, K, Rb, Cs, Be, Mg, Ca, Sr, Si, Sb, Pb, In, Zn, Ba, Ge, Al, and Sn).

The material capable of doping/dedoping lithium may be Si, Si-C composite, SiOₓ (0<x≤2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, but not Si), Sn, SnO₂, Sn-R (wherein R is an element selected from an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from among Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Ti, Ge, P, As, Sb, Bi, S, Se, Te, and a combination thereof).

In some embodiments, the Si-C composite may have a form in which amorphous carbon is coated on the surface of the silicon particles. For example, the silicon-carbon composite may include secondary particles in (each of) which silicon primary particles are assembled, and an amorphous carbon coating layer on the surface of the secondary particles. The amorphous carbon may also be disposed between the silicon primary particles, for example, the silicon primary particles may be coated with amorphous carbon. In some embodiments, the silicon-carbon composite may include a core in which silicon particles (e.g., silicon primary particles) are dispersed in an amorphous carbon matrix, and an amorphous carbon coating layer coating the surface of the core.

Because the secondary particle is present at the center (e.g., in the central portion) of the Si-C composite, it may be called the core or the center portion. Additionally, the amorphous carbon coating layer may be referred to as an outer portion or shell.

The silicon particles (e.g., silicon primary particles) may be nano silicon particles (particles in nanometer size or scale). A particle diameter (e.g., average particle diameter, such as D50) of the nano silicon particles may be about 10 nm to about 1,000 nm, and according to some embodiments, about 20 nm to about 900 nm, about 20 nm to about 800 nm, about 20 nm to about 500 nm, about 20 nm to about 300 nm, or about 20 nm to about 150 nm. If the average particle diameter of the silicon particles is within any of the above ranges, excessive or undesired volume expansion that occurs during charging and discharging may be suppressed or reduced, and disconnection of the conductive path due to particle crushing during charging and discharging may be prevented or reduced.

Herein, a mixing ratio of nano silicon particles and amorphous carbon may be about 20:80 to about 70:30 by weight.

In some embodiments, the secondary particles or the core may further include crystalline carbon. If the silicon-carbon composite further includes crystalline carbon, the Si-C composite may include secondary particles where silicon primary particles and crystalline carbon are agglomerated, and an amorphous carbon coating layer on the surface of the secondary particles.

In some embodiments, if Si-C composite includes silicon particles, crystalline carbon, and amorphous carbon, an amount of the amorphous carbon may be about 30 wt% to about 70 wt% based on 100 wt% of the total Si-C composite, and an amount of the crystalline carbon may be about 1 wt% to about 20 wt% based on 100 wt% of the total Si-C composite. Additionally, an amount of silicon particles (e.g., silicon primary particles) may be about 20 wt% to about 69 wt%, and according to some embodiments, about 30 wt% to about 60 wt% based on 100 wt% of the total Si-C composite.

There should not be a particular limit to the particle size of the Si-C composite as long as it is appropriately or suitably adjusted according to the embodiments of the present disclosure.

If the amorphous carbon is present around (e.g., surrounding) the secondary surface, its thickness (e.g. average thickness) may be adjusted appropriately or suitable, and may be, for example, a thickness (e.g. average thickness) of about 5 nm to about 100 nm.

In some embodiments, the Si-C composite as a first negative electrode active material and crystalline carbon as a second negative electrode active material may be included. Herein, the first negative electrode active material and the second negative electrode active material may be utilized in a weight ratio of about 1:99 to about 99:1. For example, the negative electrode active material may include the first negative electrode active material and second negative electrode active material in a weight ratio of about 1:99 to about 50:50 or about 5:95 to about 20:80.

The negative electrode active material layer may include a binder and may further include a conductive material. An amount of the binder in the negative electrode active material layer may be about 1 wt% to about 5 wt% based on a total weight of the negative electrode active material layer. If the conductive material is further included, the negative electrode active material layer may include about 90 wt% to about 98 wt% of the negative electrode active material, about 1 wt% to about 5 wt% of the binder, and about 1 wt% to about 5 wt% of the conductive material.

The binder serves to adhere the negative electrode active material particles to each other and also helps the negative electrode active material to adhere to the current collector. The binder may include a non-aqueous binder, an aqueous binder, or a combination thereof.

The non-aqueous binder may include ethylenepropylene copolymer, polyacrylonitrile, polystyrene, polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The aqueous binder may include a styrene-butadiene rubber (SBR), an acrylated styrene-butadiene rubber (ABR), an acrylonitrile-butadiene rubber, an acrylic rubber, a butyl rubber, a fluorine rubber, polyethylene oxide, polyvinylpyrrolidone, polypropylene, an ethylenepropylene copolymer, polyepichlorohydrin, polyphosphazene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

If an aqueous binder is utilized as the negative electrode binder, it may further include a cellulose-based compound capable of imparting viscosity. The cellulose-based compound includes one or more of carboxymethyl cellulose, hydroxypropylmethyl cellulose, methyl cellulose, or alkali metal salts thereof. The alkali metal may be Na, K, and/or Li. This cellulose-based compound may impart viscosity, and thus it may be called a thickener, and it may also act as a binder, and thus it may also be called a binder. Accordingly, an amount of the cellulose-based compound may be appropriately or suitably adjusted and does not need to be particularly limited.

The conductive material is included to provide electrode conductivity, and any suitable electrically conductive material may be utilized as a conductive material unless it causes a chemical change. Examples of the conductive material may include a carbon-based material such as natural graphite, artificial graphite, carbon black, acetylene black, ketjen black, a carbon fiber, and/or the like; a metal-based material such as copper, nickel, aluminium, silver, and/or the like in a form of a metal powder and/or a metal fiber; and a conductive polymer such as a polyphenylene derivative; or a mixture thereof.

The current collector may include one selected from among a copper foil, a nickel foil, a stainless steel foil, a titanium foil, a nickel foam, a copper foam, a polymer substrate coated with a conductive metal, and combinations thereof, but is not limited thereto.

The electrolyte may include a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, and/or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethylpropionate, decanolide, mevalonolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In some embodiments, the ketone-based solvent may include cyclohexanone, and/or the like. The alcohol-based solvent may include ethyl alcohol, isopropyl alcohol, and/or the like, and the aprotic solvent may include nitriles such as R-CN (where R is a C2 to C20 linear, branched, or cyclic hydrocarbon, a double bond, an aromatic ring, or an ether bond); amides such as dimethylformamide; dioxolanes such as 1 ,3-dioxolane and/or 1,4-dioxolane; sulfolanes; and/or the like.

The organic solvent may be utilized alone or in a mixture of one or more. If the organic solvent is utilized in a mixture, the mixture ratio may be controlled or selected in accordance with a desirable or suitable battery performance.

If the non-aqueous organic solvent is mixed and utilized, a mixed solvent of a cyclic carbonate and a chain carbonate, a mixed solvent of a cyclic carbonate and a propionate-based solvent, or a mixed solvent of a cyclic carbonate, a chain carbonate, and a propionate-based solvent may be utilized. The propionate-based solvent may be methyl propionate, ethyl propionate, propyl propionate, or a combination thereof.

Herein, if the cyclic carbonate and the chain carbonate, or the cyclic carbonate and the propionate-based solvent, are mixed, they may be mixed in a volume ratio of about 1:1 to about 1:9, and thus performance of an electrolyte solution may be improved. In some embodiments, if the cyclic carbonate, the chain carbonate, and the propionate-based solvent are mixed, they may be mixed in a volume ratio of about 1:1:1 to about 3:3:4. The mixing ratios of the solvents may be appropriately or suitably adjusted according to desirable properties.

The organic solvent may further include an aromatic hydrocarbon-based organic solvent, in addition to the carbonate-based solvent. Herein, the carbonate-based solvent and the aromatic hydrocarbon-based organic solvent may be mixed in a volume ratio of about 1:1 to about 30:1.

The aromatic hydrocarbon-based organic solvent may be an aromatic hydrocarbon-based compound of Chemical Formula 2.

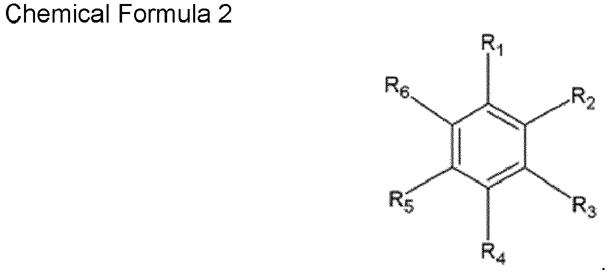

In Chemical Formula 2, R₁ to R₆ may each independently be the same or different and may be selected from among hydrogen, a halogen, a C1 to C10 alkyl group, a haloalkyl group, and a combination thereof.

Examples of the aromatic hydrocarbon-based organic solvent may be selected from among benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include an additive of vinylene carbonate, vinylethylene carbonate, and/or an ethylene carbonate-based compound of Chemical Formula 3, to further improve a cycle-life of a battery.

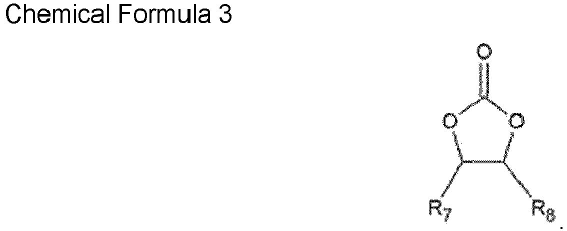

In Chemical Formula 3, R₇ and R₈ may each independently be the same or different, and may be selected from among hydrogen, a halogen, a cyano group (CN), a nitro group (NO₂), and a fluorinated C1 to C5 alkyl group, provided that at least one of R₇ or R₈ may be selected from among a halogen, a cyano group (CN), a nitro group (NO₂), and a fluorinated C1 to C5 alkyl group, and R₇ and R₈ are not hydrogen (e.g., are not both hydrogen at the same time).

Examples of the ethylene carbonate-based compound may include difluoro ethylenecarbonate, chloroethylene carbonate, dichloroethylene carbonate, bromoethylene carbonate, dibromoethylene carbonate, nitroethylene carbonate, cyanoethylene carbonate, and/or fluoroethylene carbonate. The amount of the additive for improving a cycle-life may be utilized within an appropriate or suitable range.

The lithium salt dissolved in an organic solvent supplies a battery with lithium ions, facilitates the basic operation of the rechargeable lithium battery, and improves transportation of the lithium ions between positive and negative electrodes. Examples of the lithium salt may include one or more selected from among LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiN(CₓF₂ₓ₊₁SO₂)(C_{y}F_{2y+1}SO₂), where x and y are natural numbers, for example integers of 1 to 20, LiCl, Lil, LiB(C₂O₄)₂ (lithium bis(oxalato) borate: LiBOB), and lithium difluoro(oxalate) borate (LiDFOB), as a supporting electrolytic salt. A concentration of the lithium salt may range from about 0.1 M to about 2.0 M. If the lithium salt is included at the above concentration range, an electrolyte may have excellent or suitable performance and lithium ion mobility, due to optimal or suitable electrolyte conductivity and viscosity.

The rechargeable lithium battery may further include a separator between the negative electrode and the positive electrode, depending on a kind of the battery. Examples of a separator material may include polyethylene, polypropylene, polyvinylidene fluoride, and multi-layers having two or more layers thereof such as a polyethylene/polypropylene double-layered separator, a polyethylene/polypropylene/polyethylene triple-layered separator, and a polypropylene/polyethylene/polypropylene triple-layered separator.

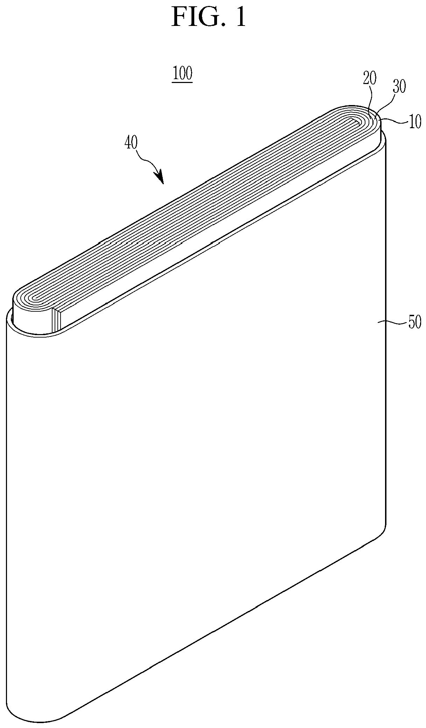

FIG. 1 is an exploded perspective view of a rechargeable lithium battery according to some embodiments. The rechargeable lithium battery according to some embodiments is illustrated as a prismatic battery but is not limited thereto and may include various suitably-shaped batteries such as a cylindrical battery, a pouch battery, and/or the like.

Referring to FIG. 1, a rechargeable lithium battery 100 according to one or more embodiments may include an electrode assembly 40 manufactured by winding a separator 30 provided between a positive electrode 10 and a negative electrode 20, and a case 50 housing the electrode assembly 40. An electrolyte may be impregnated in the positive electrode 10, the negative electrode 20 and the separator 30.

Hereinafter, examples of the present disclosure and comparative examples are described. These examples, however, are not in any sense to be interpreted as limiting the scope of the present disclosure.

### Example 1

96 wt% of a LiFePO₄ positive electrode active material having an average particle diameter (D50) of 500 nm, 0.9 wt% of carbon nanotubes having an average length of 55 µm, an average diameter of 10 nm to 20 nm, and a BET specific surface area of 300 m²/g, 1.1 wt% of ketjen black, and 2 wt% of a polyvinylidene fluoride binder were mixed in an N-methyl pyrrolidone solvent to prepare positive electrode active material slurry.

The positive electrode active material slurry was coated on an Al foil current collector and then, dried and pressurized to form a positive electrode active material layer having a thickness of 170 µm and porosity of 20%, thus manufacturing a positive electrode. The manufactured positive electrode had an active mass density of 2.5 g/cc.

Negative electrode active material slurry was prepared by mixing 98 wt% of graphite, 0.8 wt% of carboxymethyl cellulose, and 1.2 wt% of a styrene-butadiene rubber in pure water. The negative electrode active material slurry was coated on a Cu foil and then, dried and pressurized to manufacture a negative electrode.

The positive electrode and the negative electrode were utilized with an electrolyte to fabricate a rechargeable lithium battery cell utilizing a suitable method in the art. The electrolyte was prepared by dissolving 1.0 M LiPF₆ in a mixed solvent of ethylene carbonate and dimethyl carbonate (in a volume ratio of 50:50).

### Example 2

A positive electrode and a rechargeable lithium battery cell were manufactured in substantially the same manner as in Example 1, except that carbon nanotubes having an average length of 75 µm, an average diameter of 10 nm to 20 nm, and a BET specific surface area of 300 m²/g were utilized.

The positive electrode had a positive electrode active material layer with a thickness of 170 µm and porosity of 20%, and an active mass density of the positive electrode was 2.5 g/cc.

### Example 3

A positive electrode and a rechargeable lithium battery cell were manufactured in substantially the same manner as in Example 1, except that carbon nanotubes having an average length of 65 µm, an average diameter of 10 nm to 20 nm, and a BET specific surface area of 300 m²/g were utilized.

The positive electrode had a positive electrode active material layer with a thickness of 170 µm and porosity of 20%, and an active mass density of the positive electrode was 2.5 g/cc.

### Example 4

A positive electrode and a rechargeable lithium battery cell were manufactured in substantially the same manner as in Example 1, except that 96 wt% of a LiFePO₄ positive electrode active material having an average particle diameter (D50) of 500 nm, 0.8 wt% of carbon nanotubes having an average length of 65 µm, an average diameter of 10 nm to 20 nm, and a BET specific surface area of 300 m²/g, 1.2 wt% of ketjen black, and 2 wt% of a polyvinylidene fluoride binder were mixed in an N-methyl pyrrolidone solvent.

The positive electrode had a positive electrode active material layer having a thickness of 170 µm and porosity of 20%, and an active mass density of the positive electrode was 2.5 g/cc.

### Example 5

A positive electrode and a rechargeable lithium battery cell were manufactured in substantially the same manner as in Example 1, except that 96 wt% of a LiFePO₄ positive electrode active material having an average particle diameter (D50) of 500 nm, 0.7 wt% of carbon nanotubes having an average length of 65 µm, an average diameter of 10 nm to 20 nm, and a BET specific surface area of 300 m²/g, 1.3 wt% of ketjen black, and 2 wt% of a polyvinylidene fluoride binder were mixed in an N-methyl pyrrolidone solvent to prepare positive electrode active material slurry.

The positive electrode had a positive electrode active material layer having a thickness of 170 µm and porosity of 20%, and an active mass density of the positive electrode was 2.5 g/cc.

### Example 6

A positive electrode and a rechargeable lithium battery cell were manufactured in substantially the same manner as in Example 1 except that 96 wt% of a LiFePO₄ positive electrode active material having an average particle diameter (D50) of 500 nm, 0.6 wt% of carbon nanotubes having an average length of 60 µm, an average diameter of 10 nm to 20 nm, and a BET specific surface area of 300 m²/g, 1.4 wt% of ketjen black, and 2 wt% of a polyvinylidene fluoride binder were mixed in an N-methyl pyrrolidone solvent to prepare positive electrode active material slurry.

The positive electrode had a positive electrode active material layer having a thickness of 170 µm and porosity of 20%, and an active mass density of the positive electrode was 2.5 g/cc.

### Comparative Example 1

96 wt% of a LiFePO₄ positive electrode active material having an average particle diameter (D50) of 500 nm, 2 wt% of ketjen black, and 2 wt% of a polyvinylidene fluoride binder were mixed in an N-methyl pyrrolidone solvent to prepare positive electrode active material slurry.

The positive electrode active material slurry was coated on an Al foil current collector and then, dried and pressurized to prepare a positive electrode active material layer having a thickness of 170 µm and porosity of 16% and then, manufacture a positive electrode. The manufactured positive electrode had an active mass density of 2.5 g/cc.

The positive electrode and the negative electrode were utilized with an electrolyte to manufacture a rechargeable lithium battery cell utilizing a suitable method in the art. The electrolyte was prepared by dissolving 1.0 M LiPF₆ in a mixed solvent of ethylene carbonate and dimethyl carbonate (in a volume ratio of 50:50).

### Comparative Example 2

A positive electrode and a rechargeable lithium battery cell were manufactured in substantially the same manner as in Example 1, except that carbon nanotubes having an average length of 29 µm, an average diameter of 10 nm to 20 nm, and a BET specific surface area of 300 m²/g were utilized.

### Comparative Example 3

A positive electrode and a rechargeable lithium battery cell were manufactured in substantially the same manner as in Example 1, except that a LiFePO₄ positive electrode active material having an average particle diameter (D50) of 600 nm was utilized.

### Experimental Example 1) Room Temperature Cycle-life Characteristics

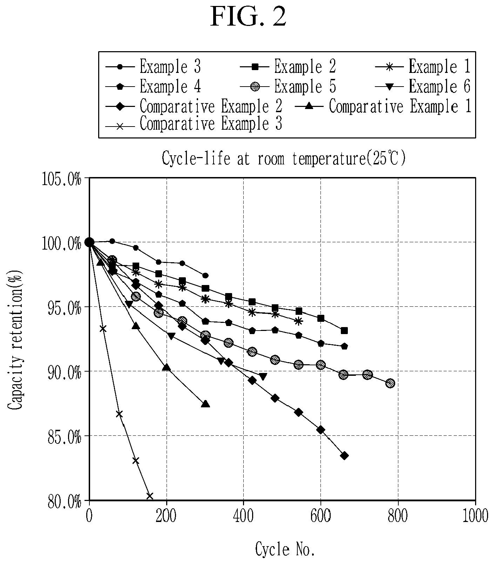

Each of the rechargeable lithium battery cells of Examples 1 to 6 and Comparative Examples 1 to 3 was 800 times charged and discharged at 0.5 C at room temperature (25 °C). A ratio of discharge capacity at each cycle to 1^{st} discharge capacity was calculated. The results are shown as capacity retention (%) in FIG. 2.

As shown in FIG. 2, the rechargeable lithium battery cells of Examples 1 to 6 exhibited capacity retention of greater than or equal to about 88% after the cycles. In contrast, the rechargeable lithium battery cell of Comparative Example 3 exhibited sharply deteriorated capacity retention at 80% before 200 cycles, and the rechargeable lithium battery cell of Comparative Example 1 exhibited deteriorated capacity retention at 87% at the 300^{th} charge and discharge. In addition, the rechargeable lithium battery cell of Comparative Example 2 exhibited deteriorated capacity retention at about 84% before 700 cycles.

### Experimental Example 2) Flexibility Characteristics

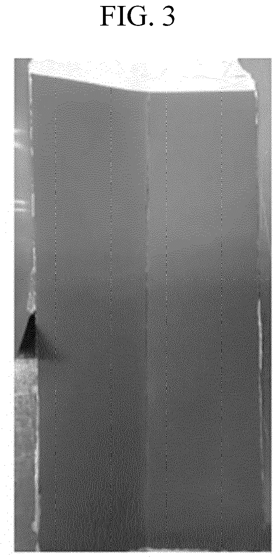

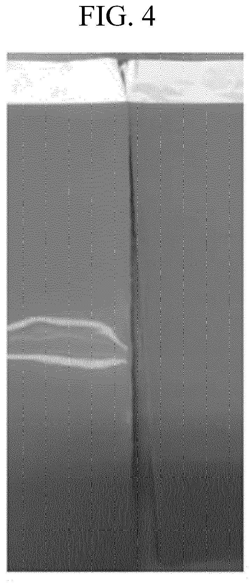

FIGS. 3 and 4 are photographs showing a state after winding each of the positive electrodes of Example 3 and Comparative Example 1, respectively.

As shown in FIG. 3, the positive electrode of Example 3 was not broken after the winding and thus may be manufactured into a cylindrical battery cell. In contrast, as shown in FIG. 4, the positive electrode of Comparative Example 1 was broken during the winding and thus may not be manufactured into a cylindrical battery cell.

From the results, the positive electrode of the present embodiments may be manufactured into one or more suitable type or kind of batteries.

An electronic apparatus, a battery management controlling device, a battery manufacturing device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the apparatus may be formed on one integrated circuit (IC) chip or on separate IC chips. Further, the various components of the apparatus may be implemented on a flexible printed circuit film, a tape carrier package (TCP), a printed circuit board (PCB), or formed on one substrate. Further, the various components of the apparatus may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Although the embodiments of the present disclosure have been described through the above, the present disclosure is not limited thereto, and may be implemented by one or more suitable modifications within the scope of the claims and their equivalents, and the detailed description of the present disclosure and the accompanying drawings, which also fall within the scope of the present disclosure.

## Claims

1. A positive electrode for a rechargeable lithium battery, comprising:
a positive electrode active material layer comprising a positive electrode active material of Chemical Formula 1 and carbon nanotubes with an average length of about 30 µm to about 80 µm; and
a current collector supporting the positive electrode active material layer,
wherein the positive electrode has an active mass density of greater than or equal to about 2.5 g/cc:
Chemical Formula 1 LiₐFe₁₋ₓMₓPO₄, and
wherein, in Chemical Formula 1, 0.90≤a≤1.8, 0≤x≤0.7, and
M is Mg, Co, Ni, Mn, or a combination thereof.

2. The positive electrode of claim 1, wherein the active mass density is about 2.5 g/cc to about 3.3 g/cc.

3. The positive electrode of claim 1 or claim 2, wherein a porosity of the positive electrode active material layer is greater than or equal to about 20%.

4. The positive electrode of any one of claims 1 to 3, wherein a porosity of the positive electrode active material layer is about 20% to about 30%.

5. The positive electrode of any one of claims 1 to 4, wherein the positive electrode active material has a nanometer size.

6. The positive electrode of any one of claims 1 to 5, wherein a particle diameter of the positive electrode active material is about 100 nm to about 5000 nm.

7. The positive electrode of any one of claims 1 to 6, wherein an amount of the carbon nanotubes is less than about 1 wt% based on a total weight of the positive electrode active material layer.

8. The positive electrode of claim 7, wherein an amount of the carbon nanotubes is greater than or equal to about 0.5 wt% and less than about 1 wt% based on the total weight of the positive electrode active material layer.

9. The positive electrode of any one of claims 1 to 8, wherein the average length of the carbon nanotubes is about 40 µm to about 80 µm.

10. The positive electrode of any one of claims 1 to 9, wherein the positive electrode active material layer further comprises a conductive material.

11. The positive electrode of any one of claims 1 to 10, wherein the positive electrode active material layer further comprises a binder.

12. A rechargeable lithium battery comprising:
the positive electrode of any one of claims 1 to 11;
a negative electrode comprising a negative electrode active material; and
an electrolyte.
